# EUROPÄISCHE PATENTSCHRIFT

(11) **EP 2 080 050 B1**
(45) Veröffentlichungstag und Bekanntmachung des Hinweises auf die Patenterteilung: **26.10.2011**
(21) Anmeldenummer: 07817704.5
(22) Anmeldetag: 19.10.2007
(51) Int. Cl.: G02B 6/42

(54) **VORRICHTUNG ZUM EINKOPPELN VON LICHT IN EINE LICHTLEITFASER**
DEVICE FOR INJECTING LIGHT INTO AN OPTICAL WAVE GUIDE
DISPOSITIF D'INJECTION DE LUMIÈRE DANS UNE FIBRE OPTIQUE

(30) Priorität: 20.10.2006 DE 102006049597
(43) Veröffentlichungstag der Anmeldung: 22.07.2009
(73) Patentinhaber: Lasos Lasertechnik GmbH, 07745 Jena (DE)
(72) Erfinder: BORNMANN, Volker, 98693 Ilmenau (DE); SCHÄFFEL, Christoph, 98693 Ilmenau (DE); BERGANN, Ludwig, 10711 Berlin (DE); MALZ, Ralf, 07743 Jena (DE)
(74) Vertreter: Liedtke, Markus
(86) Internationale Anmeldenummer: PCT/DE2007/001869
(87) Internationale Veröffentlichungsnummer: WO 2008/046414

(56) Entgegenhaltungen:
- EP-A- 0 140 821
- EP-A- 0 583 568
- US-A- 4 691 586

## Beschreibung

Die vorliegende Erfindung betrifft eine Vorrichtung zum Einkoppeln von Licht in eine Lichtleitfaser, mit der ein fokussierter Lichtstrahl mit einem Manipulator ausgerichtet wird, wobei das Einkoppelende der anzukoppelnden Lichtleitfaser mit einem optischen System verbunden ist.

Mit der Vorrichtung erfolgt der Abgleich des Systems auf maximale Koppeleffizienz, d.h. max. Übertragungswirkungsgrad des Laserstrahls in die Lichtleitfaser und die Fixierung der während der Kopplereinstellung erreichten Stellpositionen, so dass diese dauerstabil bestehen bleiben.

Die Übertragung von Informationen und Energie mittels Lichtleitung per Glasfaser ist seit ca. 40 Jahren bekannt.

Basis für derartige Übertragungssysteme sind optische Fasern aus Quarzglas oder aus anderen geeigneten Materialien mit radial variablem Brechungsindexverlauf und einem abschirmenden Mantel, um Lichtwellenleiter zu erhalten, entlang derer sich Lichtenergie kontrolliert leiten lässt. Die optischen Fasern sind extrem dünn (< 0,01 mm Kerndurchmesser) und müssen funktionssicher und übertragungsverlustarm mit Lichtquellen und Empfängern verbunden werden. Die bestmögliche Kopplung zwischen zwei Fasern wird erreicht, wenn man die Enden der zu koppelnden Fasern glatt poliert und plan aufeinander setzt. Dieser Idealzustand ist nur mit hochpräziser Ausrüstung erreichbar und aus Kostengründen für die Praxis kaum geeignet. Derartige Ausführungen sind deshalb für lösbare Verbindungen nicht geeignet.

Es ist bekannt, zur lösbaren Kopplung einer Lichtstrahlübertragung einen kollimier-ten Strahl mittels Fokussierlinsen bzw. eines -linsensystems in eine Lichtleitfaser einzuspeisen.

Um eine möglichst verlustfreie Übertragung an einer Faserkoppelstelle zu erzielen, ist es erforderlich, dass eine hochgenau axial fluchtende Ausrichtung der Achse des ankommenden Lichtbündels zur Achse des Lichtweiterleiters erfolgt.

Hierzu sind verschiedene Lösungsmöglichkeiten bekannt.

Aus der US-A-4087155 ist eine Steckerverbindung bekannt, bei der die Faserkopplung ohne zwischengeschaltete Optik erfolgt. Die Faserenden ruhen jeweils zwischen drei elastisch gelagerten, verschiebbaren Kugeln.

In US-A-4296999 wird die Faserkopplung auf der Basis zweier exakt koaxial ausgerichteter Kopplungskörper beschrieben, wobei die linsenbestückten Faserenden zwecks Fokussierung in Z-Richtung verschiebbar sind.

Ferner ist nach DE 689 22 789 T2 eine Kopplungsvorrichtung bekannt, mit der eine genaue Justierung der Strahlenbündel durch eine Einrichtung erreicht werden soll, bei der die Neigung der Faseranordnung gegenüber einer sphärischen Linse verstellt wird.

Aus US 5 029 791 ist eine Vorrichtung zur X-Y-Postionierung für ein optisches Element bekannt, bei der eine Verschiebung in zwei Koordinatenrichtungen mittels Schraubtrieben ermöglicht wird.

In EP 708 347 A1 ist eine Anordnung zum Verbinden und Ausrichten von zwei optischen Bauteilen angegeben, bei der die Genauigkeit der Positionierung durch ein Differentialgewinde erreicht wird.

Eine exakte reibungsarme Führung sowie die exakte Lagesicherung der Bauteile sind mit diesen Anordnungen nicht erreichbar.

Weiterhin ist in WO 92/02837 A1 eine Haltevorrichtung für optische Bauteile beschrieben, die eine Halteplatte aufweist, welche eine Federanordnung aufweist, die ein Verstellung in zwei Koordinatenrichtungen ermöglicht.

In US 4 691 586 ist eine Anordnung zur Feinjustierung eines Bauteils in X-Y-Richtung angegeben, bei der mit mehreren Parallelfederanordnungen eine spielfreie Justierbewegung ermöglicht wird.

Die für das Einkoppeln von Licht in eine Lichtleitfaser erforderlichen exakten Bewegungen mit drei translatorischen und einem rotatorischen Freiheitsgrad kann mit diesen Anordnungen nicht erreicht werden.

Ferner ist aus EP 0 583 568 A eine Anordnung zum Einbau von Halbleiter-Laserdioden in optische Systeme bekannt, bei der Licht in eine Lichtleitfaser eingekoppelt wird, indem ein fokussierter Lichtstrahl mit einem Manipulator ausgerichtet wird, wobei das Einkoppelende der anzukoppelnden Lichtleitfaser mit einem optischen System verbunden ist. Die Vorrichtung enthält einen Manipulator mit einer Justierplatte und eine in eine Koordinatenrichtung verstellbare Federanordnung.

Die im Stand der Technik bekannten Faserkoppler ermöglichen zwar alle erforderlichen Justierbewegungen an den Fasern vorzunehmen. Diese Prinzipe haben aber den Nachteil, dass die Strahljustierung sehr zeitaufwändig ist und entsprechende Erfahrung benötigt, weil bei den bekannten Lösungen sowohl die Winkelverstellung als auch die Parallelverschiebung innerhalb der X-Y-Ebene mit denselben Stellmitteln erfolgen und die verschiedenen Freiheitsgrade deshalb nicht unabhängig voneinander justierbar sind. Um die Justagevorgänge zu verkürzen, werden infolgedessen häufig Restfehler der Einstellung in Kauf genommen.

Der Erfindung liegt die Aufgabe zugrunde, eine Vorrichtung der eingangs genannten Art anzugeben, welche die einfache und präzise Einstellung maximaler Koppeleffizienz bei der Einkopplung von Licht in Lichtleitfasern durch einen Manipulator erlaubt und die dauerhafte Fixierung der während der Kopplereinstellung erreichten Stellpositionen ermöglicht.

Diese Aufgabe wird erfindungsgemäß mit einer Vorrichtung gelöst, welche die in Anspruch 1 angegebenen Merkmale aufweist.

Weitere vorteilhafte Ausgestaltungen sind in den Unteransprüchen angegeben.

Bei der erfindungsgemäßen Vorrichtung erfolgt eine getrennte Feinpositionierung der Fokussierungsoptik in X- und Y-Richtung mit einem Manipulator, wobei zur Verbesserung der Justageempfindlichkeit eine Untersetzung mittels Federgetriebe erfolgt. Der koaxial angeordnete Lichtwellenleiter kann in Z-Richtung und um die Z-Achse drehbar feinpositioniert werden. Alle Stellpositionen werden dauerhaft fixiert.

Der Manipulator enthält eine Justierplatte, die ein Innenteil und ein Außenteil aufweist, welche in zwei Koordinatenrichtungen unabhängig voneinander beweglich sind, wobei die Bewegungen jeweils von Parallelfederanordnungen geführt und mittels Feinschraubtrieben betätigt werden. Das Innenteil nimmt das optische System der anzukoppelnden Lichtleitfasern auf. Das Außenteil ist in einem zweiteiligen Gehäuseteil angeordnet, an dessen lösbarem Teil das Außenteil axial anliegt und in dessen festem Teil das Außenteil zusammen mit einer axial federnden Fixierscheibe in einer Passung aufgenommen ist, wobei eine Fixierschraube die Fixierscheibe und die Justierplatte gegen das lösbare Gehäuseteil drückt und die justierte Position des Innenteils sichert.

Die Vorrichtung enthält ein Gehäuse, welches aus einem festen Gehäuseteil und einem lösbaren Gehäuseteil besteht.

Eine vorteilhafte Ausgestaltung sieht vor, dass die Fixierscheibe radiale, von einer inneren Bohrung ausgehende federnde Schlitzpaare aufweist.

Zur Einstellung und Sicherung der axialen Lage weist das lösbare Gehäuseteil in Achsrichtung eine Führung auf, die in einen kegelförmigen Gewindestutzen ausläuft, auf den ein Klemmring mit Innenkegel aufgeschraubt werden kann. Im Innern der Führung ist ein Schiebestück längsverschiebbar angeordnet, wobei zur Feinpositionierung des Schiebestücks mindestens ein Führungsstift von außen durch Radiallanglöcher im Sockel des Gehäuseteils in ein unter definiertem Winkel verlaufendes Langloch im Schiebestück eingreift, und wobei der Führungsstift von einem sockelgelagerten Drehring aufgenommen ist. Der Drehfreiheitsgrad des Schiebestücks wird durch Festlegung mittels eines in den Führungsrohrnuten längs verschiebbaren Passstiftes gesperrt.

Zweckmäßigerweise sind auf der abgeschrägten Seite des Schiebestücks in Passbohrungen ein Faseranschlag und eine Lagerzapfenhülse angeordnet, die zur Lagerung eines Drehsockels dienen, der wiederum eine Verschraubung des Glasfaserkabels trägt. In der Lagerzapfenhülse kann ein Faserpassröhrchen zur Aufnahme eines Faserkabelendes angeordnet sein. Zur Positionssicherung der justierten Drehwinkel des Faseranschlusses mittels Drehsockel sind Klemmschrauben angeordnet, die durch Radiallanglöcher vom Drehsockel in Gewindebohrungen des Schiebestücks hineinreichen, mit denen der Drehsockel und das Schiebestück gemeinsam kraft-schlüssig fixierbar sind.

Die Erfindung zeichnet sich durch eine Reihe von Vorteilen aus. Hierzu gehören insbesondere:
1. Das erzeugte Licht wird durch ein optisches System, das mittels eines Manipulators justierbar ist, mit maximaler Koppeleffizienz in die Lichtleitfaser übertragen, wobei die während der Kopplereinstellung erzielten Stellpositionen dauerhaft fixiert bleiben,
2. Durch die in X- und Y-Richtung wirkenden Federanordnungen werden genaue und spielfreie Justierbewegungen ermöglicht, die voneinander getrennt sind und sich deshalb nicht gegenseitig beeinflussen.
3. Durch das Anpressen der Justierplatte mittels Fixierscheibe nach Beendigung der Justiervorgänge wird die erreichte Position unabhängig von Setzungselastizitäten in den Feinschraubtrieben festgehalten.

Die Erfindung wird im Folgenden anhand eines Ausführungsbeispiels näher erläutert.

In der zugehörigen Zeichnung zeigen:
- Figur 1: eine perspektivische Darstellung des Zusammenbaues der Gesamtvorrichtung und
- Figur 2: die Justierplatte mit Federgelenkanordnungen.

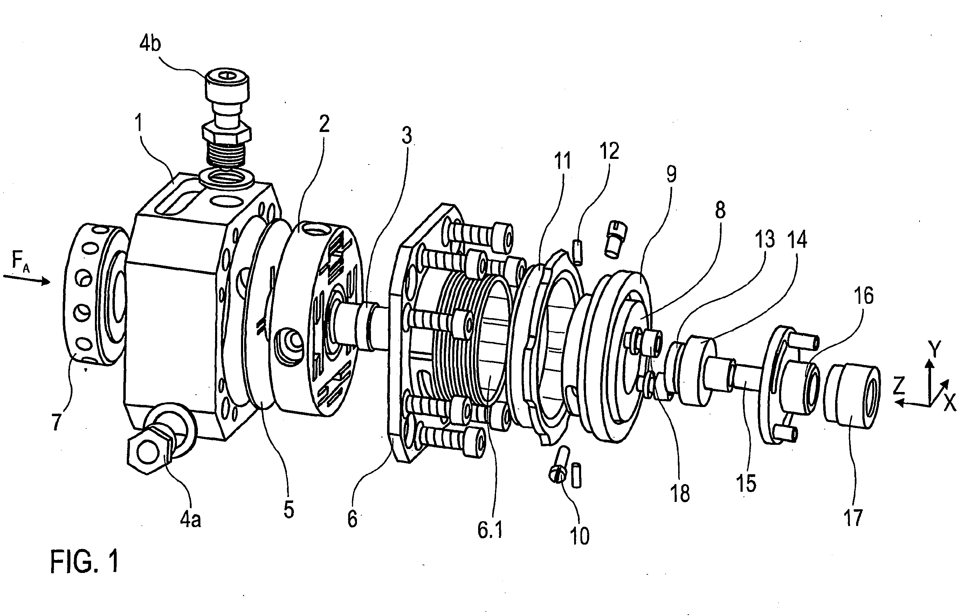

Wie aus **Figur 1** ersichtlich ist, nimmt ein Gehäuseteil 1 eine Justierplatte 2 auf, die zur Verschiebung eines axial in Z-Richtung in der Justierplatte 2 befestigten optischen Systems 3 dient. Die Justierplatte 2 besteht aus je in X- und Y-Richtung verstellbaren in Reihen geschalteten Federanordnungen, wobei jeweils eine als richtungsparallel führende Parallelfederanordnung 2ax und 2ay ausgebildet ist und die andere als Vorfeder 2bx und 2by, an welche in Hauptverformungsrichtung jeweils ein Feinschraubtrieb 4a und 4b, in Gehäuseteil 1 radial symmetrisch zu den Vorfedem 2bx und 2by angeordnet, angreifen.

Die in X- und Y-Richtung wirkenden Federanordnungen sind ineinander verschachtelt, so dass das optiktragende Zentrum von Justierplatte 2 in den jeweiligen Koordinaten unabhängig voneinander linear und spielfrei verschoben werden kann. Neben der Justierplatte 2 ist in axialer Richtung zum Gehäuseteil 1 eine Fixierscheibe 5 angeordnet. Die Fixierscheibe 5 ist mit einer Innenbohrung als Strahlendurchlass versehen und weist vorzugsweise von dort ausgehende radiale, jeweils um 90° versetzte, federnde Schlitzpaaren auf.

Zur Gewährleistung der Führungsfunktionen sind die Justierplatte 2 und die Fixierscheibe 5 im Gehäuseteil 1 so angeordnet, dass nur die Randzonen per Passung und Klemmung fixiert sind und dass das optiktragende Zentrum der Justierplatte 2 in X-und Y-Richtung linear verschiebbar ist. Das Gehäuseteil 6 verschließt das Gehäuseteil 1.

Auf die Fixierscheibe 5 wird mittels einer Fixierschraube 7, die ebenfalls eine axiale Bohrung als Strahlendurchlass aufweist und mit einer axialen Gewindebohrung in Gehäuseteil 1 eingebracht ist, zur Positionssicherung des optiktragende Zentrum von Justierplatte 2 eine Anpresskraft F_{A} aufgebracht. Damit wird nach der Justierung des optischen Systems 3 mittels Feinschraubtrieben 4a und 4b die definierte Position durch Anpressen der Justierplatte 2 durch die Fixierscheibe 5 festgehalten. Die Fixierschraube 7 drückt hierzu die Fixierscheibe 5 gegen die Gehäuseteille 1 und 6, so dass die Lage der Justierplatte 2 unabhängig von Setzungselastizitäten in den Feinschraubtrieben 4a und 4b festgehalten wird.

Das Gehäuseteil 6 weist auf der anschraubflächenabgewandten Seite eine in Z-Achsrichtung geschlitzte rohrförmige Führung auf, die im Sockel verstärkt ist, in die symmetrisch zwei Radiallanglöcher eingebracht sind und die am Ende in einen Gewindestutzen mit kegeliger Überdrehung ausläuft. Diese Anordnung dient dazu, ein mit Axialbohrung (zwecks Lichtdurchlass) versehenes Schiebestück 8 längsverschiebbar (in Z-Richtung) aufzunehmen.

Zur Präzisionsumfangsklemmung von Schiebestück 8 im Passzylinder von Gehäuseteil 6 erzeugt ein auf den Gewindestutzen aufschraubbarer Klemmring 9 mit Innenkegel auf den durch Schlitze segmentierten Gewindestutzen Radialklemnikräfte, die zur Fixierung der Z-Position von Schiebestück 8 führen.

Die Feinpositionierung von Schiebestück 8 in Z-Richtung wird dadurch erreicht, dass mindestens ein Führungsstift 10 von außen durch Radiallanglöcher im Sockel der Führung von Gehäuseteil 6 in ein unter definierten Winkel verlaufendes Langloch von Schiebestück 8 eingreift, wobei der Führungsstift 10 vom sockelgelagerten Drehring 11 aufgenommen ist.

Eine Drehung an Drehring 11 mit fest eingebrachtem Führungsstift 10 bewirkt, dass der im Sockellangloch geführte Führungsstift 10 in einem unter definierten Winkel eingebrachten Langloch von Schiebestück 8 auf eine Schräge drückt und somit eine Längsverschiebung des Schiebestück 8 bewirkt, wobei dessen Drehfreiheitsgrad durch Festlegung mittels eines in den Führungsflanschnuten längs (in Z-Richtung) verschiebbaren Passstiftes 12 aufgehoben wurde.

Auf der abgeschrägten (in Richtung Faseranschluss) Seite von Schiebestück 8 sind in Passbohrungen Faseranschlag 13 und Lagerzapfenhülse 14, zur Lagerung von Drehsockel 16, der wiederum die Verschraubung 17 eines Glasfaserkabels trägt, eingebracht.

In die Lagerzapfenhülse 14 wird ein Faserpassröhrchen 15 zur Aufnahm eines Faserkabelendes eingebracht. Dabei dient der Faseranschlag 13 zur Lagesicherung des Kabelendes und zum Auffinden der funktionsrichtigen Drehlage der Faser.

Zur Positionsfixierung der Drehlage, die mittels Drehsockel 16 eingestellt wird, dienen Klemmschrauben 18, mit denen der Drehsockel 16 mit dem Schiebestück 8 verschraubt wird.

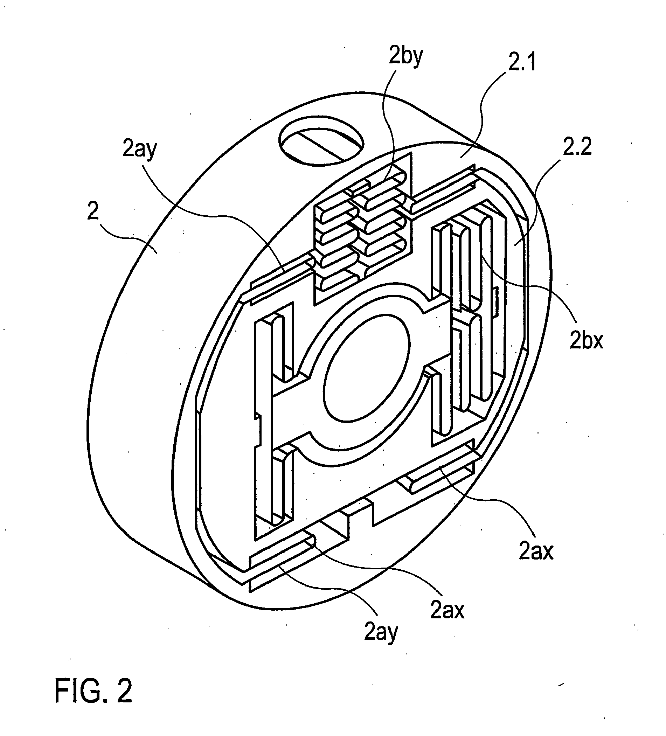

**Figur 2** zeigt die Justierplatte 2 mit ihren Federgetriebeanordnungen. Die mittige Bohrung dient zur Aufnahme des optischen Systems 3 und befindet sich in einem Segment, dass mittels gekreuzter Parallelfedernanordnungen in X- und Y-Richtung geführt wird, wobei die jeweiligen in Reihe dazu liegenden Vorfedern vorzugsweise nach dem Michelson-Prinzip gemeinsam wirkend eine feinfühlige Justieranordnung darstellen. Die Reihenschaltung in X- Richtung besteht aus Vorfeder 2bx und Parallelfederanordnung 2ax, und analog in Y-Richtung bilden Vorfeder 2by und Parallelfeder 2ay die Kreuztischanordnung mit Federgetriebeuntersetzung, betätigbar mittels der dazugehörigen Feinschraubtriebe 4a und 4b.

### BEZUGSZEICHENLISTE

- 1: Gehäuseteil
- 2: Justierplatte
- 2ax und 2ay: Parallelfederanordnung
- 2bx und 2by: Vorfeder
- 3: optischen Systems
- 4a und 4b: Feinschraubtrieb
- 5: Fixierscheibe
- 6: lösbares Gehäuseteil
- 7: Fixierschraube
- 8: Schiebestück
- 9: Klemmring
- 10: Führungsstift
- 11: Drehring
- 12: Passstiftes
- 13: Faseranschlag
- 14: Lagerzapfenhülse
- 15: Faserpassröhrchen
- 16: Drehsockel
- 17: Verschraubung
- 18: Klemmschrauben
- F_{A}: Anpresskraft

## Patentansprüche

1. Vorrichtung zum Einkoppeln von Licht in eine Lichtleitfaser, mit der ein fokussierter Lichtstrahl mit einem Manipulator ausgerichtet wird, wobei das Einkoppelende der anzukoppelnden Lichtleitfaser mit einem optischen System verbunden ist, wobei die Vorrichtung ein Gehäuse enthält, welches aus einem festen Gehäuseteil (1) und einem lösbaren Gehäuseteil (6) besteht und die Vorrichtung enthält:
- einen Manipulator, bestehend aus einer Justierplatte (2), die einen Außenteil (2.1), einen Innenteil (2.2) und zwei zwischen dem Außenteil (2.1) und dem Innenteil (2.2) angeordnete, in zwei Koordinatenrichtungen unabhängig voneinander verstellbare Federanordnungen aufweist, wobei jeder Federanordnung aus einer richtungsparallel führenden Parallelfederanordnung (2ax, 2ay) und einer in Reihe dazu geschalteten Vorfeder (2bx, 2by) besteht,
- eine über eine axiale Gewindebohrung in das feste Gehäuseteil (1) einbringbaren Fixierschraube (7), und
- eine axial federnden Fixierscheibe (5),
- wobei das Innenteil (2.2) in X- und in Y-Richtung verstellbar ist,
- wobei das Innenteil (2.2) das optische System aufweist, das mit der anzukoppelnden Lichtleitfaser verbunden ist,
- und wobei die Fixierscheibe (5) in die Justierplatte (2) von der in das Gehäuseteil (1) eingedrehten Fixierschraube (7) derartig in Strahldurchlassrichtung gegen das lösbare Gehäuseteil (6) gedrückt ist, dass die justierte Position des Innenteils (2.2) gesichert ist.

2. Vorrichtung nach Anspruch 1, **dadurch gekennzeichnet, dass** am Gehäuse Feinschraubtriebe (4a, 4b), angeordnet sind, die jeweils durch eine in dem Außenteil (2.2) eingebrachte Öffnung an den Vorfedern (2bx, 2by) angreifen.

3. Vorrichtung nach einem der vorhergehenden Ansprüche, **dadurch gekennzeichnet, dass** die Fixierscheibe (5) radiale, von einer inneren Bohrung ausgehende federnde Schlitzpaare aufweist.

4. Vorrichtung nach einem der vorhergehenden Ansprüche, **dadurch gekennzeichnet, dass** das lösbare Gehäuseteil (6) eine Anschraubfläche aufweist, und auf seiner der Anschraubfläche abgewandten Seite einen geschlitzten rohrförmigen Führungsflansch (6.1) besitzt, der in einen kegelförmigen Gewindestutzen ausläuft, auf dem ein Klemmring (9) mit Innenkegel aufgeschraubt ist und dass im Innern des geschlitzten rohrförmigen Führungsflansches (6.1) ein Schiebestück (8) längsverschiebbar angeordnet ist.

5. Vorrichtung nach Anspruch 4, **dadurch gekennzeichnet, dass** mindestens ein Führungsstift (10) von außen durch Radiallanglöcher im Sockel des Führungsflansches (6.1) vom Gehäuseteil (6) in ein unter definiertem Winkel verlaufendes Langloch des Schiebestücks (8) eingreift, und wobei der Führungsstift (10) von einem sockelgelagerten Drehring (11) aufgenommen ist, und in den Führungsflanschnuten ein längs verschiebbarer Passstift (12) angeordnet ist.

6. Vorrichtung nach Ansprush 4 oder Anspruch 5 **dadurch gekennzeichnet, dass** das Schiebestück (8) eine abgeschrägte Seite aufweist, in der mittels Passbohrungen ein Faseranschlag (13) und eine Lagerzapfenhülse (14) angeordnet sind, die zur Lagerung eines Drehsockels (16) dienen, der wiederum eine Verschraubung (17) eines Glasfaserkabels trägt.

7. Vorrichtung nach Anspruch 6, **dadurch gekennzeichnet, dass** in der Lagerzapfenhülse (14) ein Faserpassröhrchen (15) zur Aufnahme eines Faserkabelendes angeordnet ist, und zur Positionssicherung der justierten Drehlage des Faseranschlusses mittels Drehsockel (16) Klemmschrauben (18) angebracht sind, die durch Radiallanglöcher vom Drehsockel (16) in Gewindebohrungen des Schiebestücks (8) hineinreichen, mit denen der Drehsockel (16) samt dem Schiebestück (8) kraftschlüssig fixierbar ist.

## Claims

1. A device for injecting light into an optical wave guide, by which a focused light beam is aligned by a manipulator, an injection end of the optical wave guide to be coupled being connected to an optical system, the device containing a housing including a fixed housing part (1) and a detachable housing part (6) and the device comprising:
- a manipulator having an adjusting plate (2), which has an outer part (2.1), an inner part (2.2), and two spring arrangements that are situated between the outer part (2.1) and the inner part (2.2) and that are independently adjustable in two coordinate directions, each spring arrangement including a parallel spring arrangement (2ax, 2ay) having directionally parallel guidance and a preliminary spring (2bx, 2by) connected in series thereto,
- a fixing screw (7) that may be introduced into the fixed housing part (1) via an axial threaded bore hole, and
- an axially elastic fixing disk (5),
- wherein the inner part (2.2) can be adjusted in an X and Y direction,
- wherein the inner part (2.2) comprises the optical system which is connected to the optical wave guide that is to be coupled,
- and wherein the fixing disk (5) is pressed into the adjusting plate (2) by the fixing screw (7) screwed into the housing part (1) against a detachable housing part (6) in a direction of beam passage such that the adjusted position of the inner part (2.2) is fixed.

2. The device according to claim 1, **characterized in that** precision screw mechanisms (4a, 4b) are arranged on the housing, each of which precision screw mechanism (4a, 4b) engages with the preliminary springs (2bx, 2by) through an opening introduced into the outer part (2.2).

3. The device according to one of the preceding claims, **characterized in that** the fixing disk (5) comprises pairs of radial, elastic slots that extend outward from an inner bore hole.

4. The device according to one of the preceding claims, **characterized in that** the detachable housing part (6) comprises a screw-on surface and has a slotted tubular guide flange (6.1) on its side facing away form the screw-on surface, the tubular guide flange (6.1) tapering toward a cone-shaped threaded connector onto which a clamping ring (9) having an inner cone is screwed, and wherein a sliding piece (8) is situated in a longitudinally movable manner inside the slotted tubular guide flange (6.1).

5. The device according to claim 4, **characterized in that** at least one guide pin (10) engages from the outside through radial elongated holes in the base of the guide flange (6.1) of the housing part (6) with an elongated hole of the sliding piece (8) running at a defined angle, wherein the guide pin (10) is accommodated by a rotation swivel (11) mounted in the base and wherein a longitudinal movable alignment pin (12) is situated in the guide flange grooves.

6. The device according to claim 4 or 5, **characterized in that** the sliding piece (8) comprises a beveled side, in which a fiber stop (13) and a journal sleeve (14) are situated by alignment bore holes for mounting the rotary base (16) which supports a screw connection (17) of an optical fiber cable.

7. The device according to claim 6, **characterized in that** a fiber alignment tube (15) is situated in the journal sleeve (14) for accommodating an end of the optical cable, and clamping screws (18) are provided to fix the adjusted rotational position of the fiber connection by the rotary base (16), the clamping screws (18) extending through radially elongated holes from the rotary base (16) into threaded bore holes of the sliding piece (8), via which the rotary base (16) together with the sliding piece (8) is fixable in a non-positive manner.

## Revendications

1. Dispositif d'injection de lumière dans une fibre conductrice de lumière par laquelle un faisceau lumineux concentré est orienté à l'aide d'un manipulateur,
l'extrémité d'injection de la fibre conductrice de lumière à raccorder étant reliée à un système optique,
le dispositif contenant un boîtier constitué d'une partie fixe (1) de boîtier et d'une partie libérable (6) de boîtier, le dispositif contenant :
- un manipulateur constitué d'une plaque d'ajustement (2) qui présente une partie extérieure (2.1), une partie intérieure (2.2) et deux systèmes élastiques aptes à être ajustés indépendamment l'un de l'autre dans deux direction de coordonnées et disposés entre la partie extérieure (2.1) et la partie intérieure (2.2), chaque ensemble élastique étant constitué d'un ensemble élastique (2ax, 2ay) de guidage orienté en parallèle dans des directions parallèles et d'un pré-ressort (2bx, 2by) raccordé en série à cet ensemble,
- une vis de fixation (7) qui peut être insérée dans la partie fixe (1) de boîtier par un alésage fileté axial et
- une plaque de fixation (5) axialement élastique,
- la partie intérieure (2.2) pouvant être ajustée dans la direction X et dans la direction Y,
- la partie intérieure (2.2) présentant le système optique relié à la fibre conductrice de lumière à raccorder et
- la plaque de fixation (5) étant repoussée dans la plaque d'ajustement (2) par la vis de fixation (7) vissée dans la partie (1) du boîtier contre la partie libérable (6) de boîtier dans la direction de passage du faisceau de telle sorte que la position ajustée de la partie intérieure (2.2) soit bloquée.

2. Dispositif selon la revendication 1, **caractérisé en ce que** de fins ajustements filetés (4a, 4b) qui engagent chacun les pré-ressorts (2bx, 2by) à travers une ouverture ménagée dans la partie extérieure (2.2) sont disposés sur le boîtier.

3. Dispositif selon l'une des revendications précédentes, **caractérisé en ce que** la vis de fixation (5) présente des paires de fentes radiales élastiques partant d'un alésage intérieur.

4. Dispositif selon l'une des revendications précédentes, **caractérisé en ce que** la partie libérable (6) de boîtier présente une surface de vissage et possède sur son côté non tourné vers la surface de vissage une bride tubulaire fendue de guidage (6.1), cette bride se prolongeant en une tubulure filetée conique sur laquelle une bague de serrage (9) à cône intérieur est vissée, et **en ce qu'**une pièce coulissante (8) est disposée à coulissement longitudinal à l'intérieur de la bride tubulaire fendue de guidage (6.1).

5. Dispositif selon la revendication 4, **caractérisé en ce qu'**au moins une tige de guidage (10) s'engage depuis l'extérieur, par des trous longitudinaux radiaux, dans le socle de la bride de guidage (6.1), depuis la pièce (6) de boîtier jusque dans un trou oblong, qui s'étend sous un angle défini, de la pièce coulissante (8), la tige de guidage (10) étant reprise par une bague rotative (11) montée sur le socle, une tige d'adaptation (12) apte à coulisser longitudinalement étant disposée dans des rainures de la bride de guidage.

6. Dispositif selon la revendication 4 ou la revendication 5, **caractérisé en ce que** la pièce coulissante (8) présente un côté incliné dans lequel une butée (13) pour fibre et une douille (14) pour tourillon de palier qui servent à monter un socle rotatif (16) qui lui-même porte un vissage (17) d'un câble en fibres optiques sont disposées au moyen d'alésages d'ajustement.

7. Dispositif selon la revendication 6, un tube (15) d'ajustement de fibres qui reprend l'extrémité d'un câble de fibres est disposé dans la douille (14) de tourillon de palier, tandis que pour bloquer la position de rotation ajustée du raccord de fibres au moyen du socle rotatif (16), des vis de serrage (18) qui traversent des trous oblongs radiaux du socle rotatif (16) pour pénétrer dans des alésages filetés de la pièce coulissante (8) sont prévues pour permettre de fixer le socle rotatif (16) en correspondance mécanique sur la pièce coulissante (8).
